(19) Europäisches Patentamt
European Patent Office
Office européen des brevets

(11) **EP 3 081 602 A1**

(12) **EUROPÄISCHE PATENTANMELDUNG**

(43) Veröffentlichungstag:
**19.10.2016   Patentblatt 2016/42**

(51) Int Cl.:
*C09C 1/36* (2006.01)   *C09C 1/40* (2006.01)
*C09C 1/00* (2006.01)   *C09D 5/02* (2006.01)

(21) Anmeldenummer: **15001123.7**

(22) Anmeldetag: **17.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Kronos International, Inc.**
**51373 Leverkusen (DE)**

(72) Erfinder:
• **Wilkenhoener, Uwe**
  **42113 Wuppertal (DE)**
• **Mersch, Frank**
  **42799 Leichlingen (DE)**

(54) **ALUMINIUMHYDROXID-HALTIGE KOMPOSITPIGMENTE UND VERFAHREN ZU IHRER HERSTELLUNG**

(57)    Die Erfindung betrifft Aluminiumhydroxid-haltige Kompositpigmente, ihre Herstellung und ihre Verwendung zur Verbesserung der Pigment-Lichtstreueffzenz in Beschichtungen, Kunststoffen, Papier und Laminat.

Die Kompositpigmentpartikel enthalten Pigmentpartikel, insbesondere Titandioxid, und gefälltes Aluminiumhydroxid. In einer Ausführung der Erfindung enthält das Kompositpigment zusätzlich mindestens einen weiteren anorganischen und/oder mindestens einen organischen Füllstoff als Extender, bevorzugt gewählt aus der Gruppe Dolomit, Huntit, Magnesit und Hydromagnesit. Die erfindungsgemäßen Kompositpigmentpartikel werden durch in situ-Fälfung von Aluminiumhydroxid in einer wässrigen Pigmentpartikelsuspension hergestellt.

Die Verwendung der erfindungsgemäßen Kompositpigmentpartikel auf Basis Titandioxid ermöglicht je nach gewählter Kombination Pigmenteinsparungen ohne oder mit nur geringen Verlusten der optischen Eigenschaften. Alternativ können bei gleichem Pigmentgehalt auch bessere Werte erzielt werden. Insbesondere kann mit den erfindungsgemäßen Kompositpigmentpartikeh ein Teil oder der gesamte Titandioxid-Anteil im Anwendersystem ersetzt werden.

**EP 3 081 602 A1**

**Beschreibung**

Gebiet der Erfindung

Die Erfindung betrifft Aluminiumhydroxid-haltige Kompositpigmente, ihre Herstellung und ihre Verwendung zur Verbesserung der Pigment-Lichtstreueffizenz in Beschichtungen, Kunststoffen, Papier und Laminat.

Technologischer Hintergrund der Erfindung

Anorganische Pigmente und insbesondere Titandioxidpigmente werden oft in verschiedene Matrices als Weißmacher, Tönungsmittel oder Trübungsmittel eingearbeitet. Titandioxid streut aufgrund seiner hohen Brechkraft Licht besonders effizient und ist deswegen das wichtigste Weißpigment in den Anwendungsbereichen Farben und Lacke, Kunststoffe, Papier und Fasern. Die Lichtstreueffizienz sinkt, wenn die Titandioxidpartikel in einem geringeren Abstand als etwa der halben Wellenlänge des Licht, also etwa 0,20 bis 0,25 $\mu$m voneinander entfernt in der Matrix verteilt sind. Die Lichtstreueffizienz wird typischerweise mit Hilfe des Deckvermögens bzw. des Aufhellvermögens (tinting strength) des Titandioxidpigments in der Matrix gemessen.

Titandioxid ist auf der anderen Seite ein signifikanter Kostenfaktor, und es wird seit längerem nach Möglichkeiten gesucht, um die Einsatzmenge an Titandioxid zu verringern, ohne signifikante Einbußen im Deckvermögen hinnehmen zu müssen. Eine Einsparung ist möglich durch die Kombination von Titandioxidpartikeln mit geeigneten Füllstoffen, die als sogenannte "Extender-Parkikel" als Abstandshalter für die $TiO_2$-Partikel wirken sollen. Die bekannten Verfahren umfassen sowohl die einfache Mischung der Komponenten als auch die Verbindung der $TiO_2$-Partikel mit den Extender-Partikeln mittels eines ausgefällten Bindemittels oder die in situ-Ausfällung des Extenders auf der Oberfläche der Titandioxidpartikel. Desweiteren sind Verfahren bekannt, um die feinen Titandioxidpartikel auf gröberen Füllstoffpartikeln zu verteilen.

Aus dem umfangreich vorliegenden Stand der Technik werden im Folgenden nur ausgewählte Schriften zitiert.

WO 1999/035193 A1 beschreibt beispielsweise die Herstellung einer Pigmentmischung aus Titandioxid und einem anorganischen Extender ("Spacer") wie $SiO_2$ oder $CaCO_3$ zur Verwendung bei der Papierherstellung.

DE 10 057 294 C5 offenbart ein Pigmentgemisch aus Titandioxid und Talkum zum Einsatz in Dekorrohpapier.

EP 0 881 299 B1 offenbart ein Titandioxidpigment, welches mit anorganischen Nanopartikeln, beispielsweise kolloidaler Kieselsäure, sowie einer Schicht aus anorganischen Oxiden wie Aluminium-, Silicium- oder Zirkonoxid beschichtet ist, wobei die anorganische Oxidschicht entweder zwischen Titandioxidoberfläche und Nanopartikeln angeordnet ist oder die äußere Deckbeschichtung bildet. Bei den anorganischen Nanopartikeln handelt es sich um $SiO_2$, $Al_2O_3$ oder $CaCO_3$.

DE 10 2006 012 564 A1 offenbart Titandioxidpigmentpartikel, auf deren Oberfläche sich Mikrohohlkugeln sowie eine Aluminiumoxid-Aluminiumphosphat-Beschichtung befinden.

In dem Verfahren gemäß EP 0 956 316 B1 werden Pigmentteilchen und gefälltes Calciumcarbonat (PCC) in wässriger Phase miteinander vermischt, so dass ein Kompositpigment entsteht, bei dem die Carbonatteilchen mit einer Teilchengröße von 30 bis 100 nm an die Oberfläche der Pigmentteilchen angeheftet sind. Das Kompositpigment enthält 30 bis 90 Gew.-% gefälltes Calciumcarbonat.

DE 1 792 118 A1 offenbart die in situ-Ausfällung von Calciumcarbonat in einer Titandioxidpigmentsuspension durch Vermischen einer Galciumchlorid- und einer Natriumcarbonatlösung, wobei eine dieser Lösungen Titandioxidpigment enthält. Es entstehen Calciumcarbonat-Titandioxid-Kompositpartikel.

WO 2000/001771 A1 offenbart ein Kompositpigment, das anorganische Partikel einer Partikelgröße von etwa 1 bis 10 $\mu$m enthält und an deren Oberfläche in Folge entgegengesetzter Oberflächenladung Titandioxidpigmentpartikel geheftet sind. Die Herstellung erfolgt in einer wässrigen Phase. Die anorganischen Partikel sind ausgewählt aus gängigen Füllstoffen wie z.B. Kaolin, Ton, Talkum, Glimmer oder Carbonate.

Die Patentanmeldung WO 2014/000874 A1 offenbart ein Kompositpigment, das Titandioxid und ein partikuläres Material als Extender enthält sowie Calciumcarbonat, das im Herstellungsprozess gefällt wird. Die Kompositpartikel werden in einem kombinierten Prozess aus Dispergierung und Fällung hergestellt. Das Kompositpigment ist geeignet zur Verwendung in Beschichtungen, Kunststoff und Laminat.

Die Patentanmeldung EP 1 3005 813.4 (angemeldet 13.12.2013) offenbart ein Kompositpigment, das anorganische Pigmentpartikel, insbesondere Titandioxid, und gefälltes partikuläres Calciumphosphat enthält. Das Korrtpositpigment ist geeignet zur Verwendung in Beschichtungen, Kunststoffen und insbesondere in Papier und Laminat.

Aufgabenstellung und Kurzbeschreibung dar Erfindung

Der Erfindung liegt die Aufgabe zugrunde, ein alternatives Kompositpigment bereitzustellen sowie ein Verfahren zur Herstellung anzugeben.

Die Aufgabe wird gelöst durch ein Aluminiumhydroxid-haltiges Kompositpigment, das anorganische Pigmentpartikel und gefälltes Aluminiumhydroxid in einer Menge von mindestens 20 Gew.-% bevorzugt mindestens 40 Gew.-%.enthält.

Die Aufgabe wird desweiteren gelöst durch ein Verfahren zur Herstellung von Aluminiumhydroxid-haltigen Kompositpigmentpartikeln, wobei eine wässrige alkalische Lösung von Natriumaluminat mit einem pH-Wert von mindestens 12 bereitgestellt wird, anschließend anorganische Pigmentpartikel zugegeben wird und der pH-Wert der Lösung in den Bereich <8 und >3 abgesenkt wird, so dass Aluminiumhydroxid gefällt wird und sich Aluminiumhydroxid-haltige Kompositpigmentpartikel bilden, die mindestens 20 Gew.-% bevorzugt mindestens 40 Gew.-% gefälltes Aluminiumhydroxid enthalten, und wobei die Kompositpartikel abschließend abgetrennt werden.

Weitere vorteilhafte Ausformungen der Erfindung sind in den Unteransprüchen angegeben.

Figuren

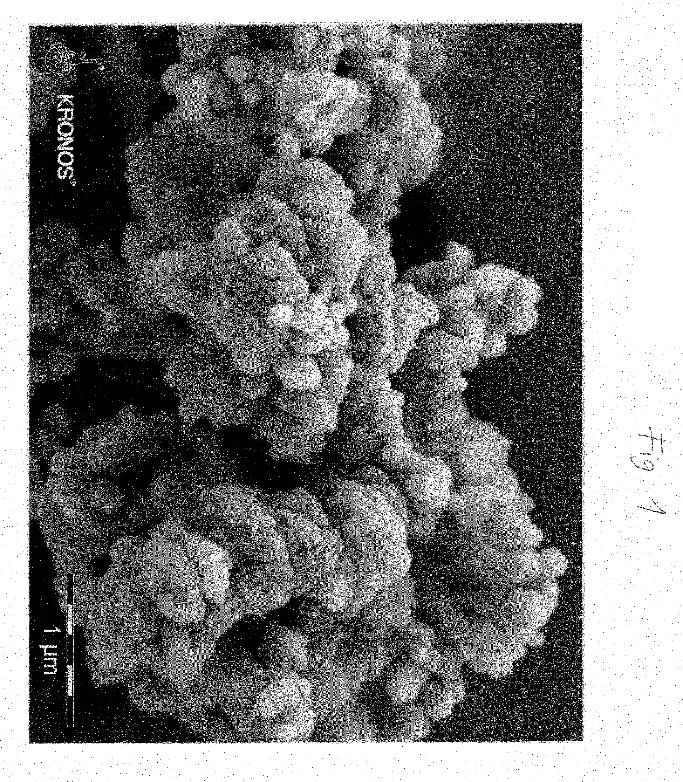

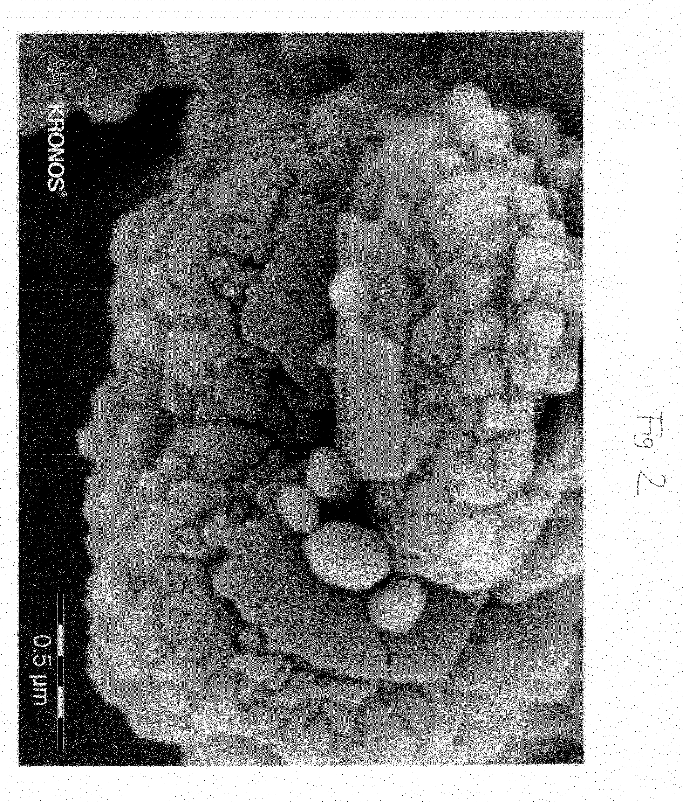

Figur 1 und 2: Rasterelektronenmikroskopaufnahmen von Kompositpigmentpartikeln gemäß Beispiel 1.

Beschreibung der Erfindung

Alle im Folgenden offenbarten Angaben bezüglich Größe in $\mu$m usw., Konzentration in Gew.-% oder Vol.-%, pH-Wert usw. sind so zu verstehen, dass alle Werte, die im Bereich der dem Fachmann bekannten jeweiligen Messgenauigkeit liegen, mit umfasst sind.

Die erfindungsgemäßen Kompositpigmentpartikel enthalten anorganische Pigmentpartikel, und in situ gefälltes Aluminiumhydroxid. Unter Aluminiumhydroxid werden im folgenden Aluminiumorthohydroxid (z.B. Gibbsit, Bayerit, Nordstrandit, Hydrargillit) und Aluminiummetahydroxid (z.B. Böhmit, Diaspor) verstanden. Die gefällten Aluminiumhydroxidpartikel bilden diskrete Partikel bzw. Parlikelagglomerate und wirken als Träger für die Pigmentpartikel oder als Abstandshalter (Extender). Die erfindungsgemäßen Kompositpartikel zeichnen sich weiterhin dadurch aus, dass zwischen Träger- bzw. Extenderpartikel und Pigmentpartikel ein starker Verbund existiert, der in der weiteren üblichen Verarbeitung beim Anwender wie z.B. bei der Dispergierung in einem Dissolver oder in einem Inline-Dispergierer nur schwer getrennt werden kann. Damit unterscheidet sich das erfindungsgemäße Kompositpigment von bekannten Pigment-Extender-Mischungen.

Unter anorganischen Pigmentpartikeln werden im Rahmen der Erfindung Partikel im Größenbereich von etwa 100 nm bis etwa 1 $\mu$m verstanden. Als Pigment kommen grundsätzlich anorganische Pigmente wie Titandioxid, Eisenoxid, Zinkoxid, Zinksulfid, Chrompigmente und Sulfide in Betracht.

Insbesondere ist Titandioxid geeignet. Grundsätzlich können oberflächenbehandelte oder unbehandelte Titandioxidpigmentpartikel verwendet werden. Bevorzugt werden unbehandelte Titandioxidgrundkörper-Partikel verwendet, insbesondere Titandioxidgrundkörper-Partikel aus dem Chloridprozess. Die Titandioxidpigmentpartikel können dotiert sein, vorzugsweise mit Aluminium. Wirtschaftlich besonders vorteilhaft ist es, nach dem Chloridprozess hergestellte, nicht-sandgemahlene und nicht-entchlorte Titandioxidgrundkörper-Partikel einzusetzen. Alternativ ist es auch möglich, sandgemahlene und entchlorte Titandioxidgrundkörper-Partikel aus dem Chloridprozess oder sandgemahlene Titandioxidgrundkörper-Partikel aus dem Sulfatprozess einzusetzen.

Die Aluminiumhydroxidpartikel sind überwiegend kristallin. In einer besonderen Ausführung weisen sie eine Partikelgröße von mindestens 0,05 $\mu$m, bevorzugt mindestens 0,5 $\mu$m und insbesondere mindestens 1,0 $\mu$m auf. Die Partikel sind sowohl Primärpartikel als auch Partikelagglomerate.

Die erfindungsgemäßen Kompositpartikel enthalten mindestens 20 Gew.-%, insbesondere mindestens 40 Gew.-% Aluminiumhydroxid. Der Pigmentgehalt der Kompositpartikel beträgt vorzugsweise 20 bis 80 Gew.-%,

In einer besonderen Ausführung der Erfindung enthält das Kompositpigment zusätzlich mindestens einen weiteren anorganischen und/oder mindestens einen organischen Füllstoff. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Silicumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt- und Bimsmehl, Perlite sowie weitere dem Fachmann bekannten Füllstoffe (z.B. Wollastonit, Feldspate, Glimmer, faserartige Füllstoffe, Glasmehl, etc.). Besonders bevorzugt sind Dolomit, Huntit, Magnesit und Hydromagnesit.

Der weitere Füllstoff weist bevorzugt eine Partikelgröße von etwa 0,1 bis 30 $\mu$m, insbesondere von etwa 1 bis 10 $\mu$m auf. Der weitere Füllstoff kann in einer Menge von 10 bis 60 Gew.-%, bevorzugt 20 bis 50 Gew.-% enthalten sein.

Die erfindungsgemäßen Kompositpigmentpartikel enthalten das Pigment in ideal dispergierter Form und führen damit im Anwendersystem zu einer Steigerung der Effizienz der Lichtstreuung des anorganischen Pigments, insbesondere von Titandioxidpigment. Auf diese Weise kann der Teil des Pigments, der üblicherweise im Anwendersystem nicht ideal dispergiert, sondern "geflockt" vorliegt, eingespart werden. Die Kompositpigmentpartikel führen im Anwendersystem bei gleicher Pigmentmenge zu verbessertem Deckvermögen, bzw. erlauben im Anwendersystem eine Reduktion des Pigmentgehalts bei gleichbleibendem Deckvermögen.

Die erfindungsgemäßen Kompositpigmentpartikel werden durch in situ-Fällung von Aluminiumhydroxid in einer wässrigen Pigmentpartikelsuspension hergestellt.

Das erfindungsgemäße Verfahren geht von einer alkalischen Natriumaluminatlösung mit einem pH-Wert von mindestens 12 aus. Die gegebenenfalls erforderliche Einstellung des pH-Werts erfolgt bevorzugt mit Natronlauge.

In einer besonderen Ausführung der Erfindung handelt es sich bei der Natriumaluminatlösung um einen industriellen Reststoff, beispielsweise aus der aluminiumverarbeitenden Industrie. Natriumaluminatlösungen aus der aluminiumverarbeitenden Industrie weisen üblicherweise eine Konzentration von etwa 200g/L auf. Sofern dieser Reststoff färbende Verunreinigungen enthält und angestrebt wird, rein weißes Aluminiumhydroxid zu fällen, ist es vorteilhaft, die färbenden Verunreinigungen durch eine Vorfällung weitgehend zu entfernen. Die Vorfällung wird durch Absenken des pH-Werts eingeleitet. Erfahrungsgemäß fällt bei Raumtemperatur (bis etwa 30°C) und einem pH-Wert von etwa 12 ein geringer Teil der gelösten Stoffe aus. Das Löslichkeitsprodukt ist sowohl vom pH-Wert als auch von der Temperatur und dem Druck abhängig. Für Fällungen bei anderen Temperaturen verschiebt sich der pH-Wert entsprechend. Bevorzugt wird der pH-Wert durch Zugabe von Salzsäure oder einer sauren Aluminiumverbindung (z.B. Aluminiumsulfat) gesenkt. Nach einer Verweilzeit von etwa 1 bis 8 Stunden bildet sich ein leicht gefärbter Niederschlag und eine klare ungefärbte überstehende Lösung (Natriumaluminat).

Erfindungsgemäß wird anschließend der Aluminiumgehalt der Lösung auf etwa 250 g/L bis 400 g/L eingestellt, beispielsweise durch Zugabe einer entsprechenden Menge Natriumaluminats.

Erfindungsgemäß werden anschließend die anorganischen Pigmentpartikel in die Natriumaluminatlösung gegeben. Unter anorganischen Pigmentpartikeln werden im Rahmen der Erfindung Partikel im Größenbereich von etwa 100 nm bis etwa 1 $\mu$m verstanden. Als Pigment kommen grundsätzlich anorganische Pigmente wie Titandioxid, Eisenoxid, Zinkoxid, Zinksulfid, Chrompigmente und Sulfide in Betracht. Insbesondere ist Titandioxid geeignet. Die Titandioxidpigmentpartikel können oberflächenbehandelt oder unbehandelt sein, beispielsweise kann es sich um Titandioxidgrundkörper aus dem Sulfatprozess oder dem Chloridprozess handeln. Insbesondere sind nach dem Chloridprozess hergestellte, gemahlene oder ungemahlene Titandioxidgrundkörper-Partikel geeignet. Ebenso geeignet sind sandgemahlene Titandioxidgrundkörper-Partikel aus dem Sulfatprozess.

Das Aluminiumhydroxid wird durch Absenken des pH-Werts in den Bereich <8 und >3, bevorzugt auf einen pH-Wert von 6 bis <8 gefällt. Die Fällung kann durch Zugabe einer sauren Komponente wie einer Säure (z.B. Salzsäure) oder durch Zugabe eines sauer reagierenden Salzes (z.B. Aluminiumsulfat) eingeleitet werden. In einer besonderen Ausführung des Verfahrens können saure nicht-entchlorte Titandioxidgrundkörper-Partikel eingesetzt werden.

In einer besonderen Ausführung des Verfahrens werden zusätzlich Aluminiumhydroxid-Keime eingesetzt, insbesondere in einer Menge von 0,1 bis 1,0 Gew.-%.

Die Fällungsreaktion kann in einem statischen oder dynamischen Mischer oder in einem Rührkessel bzw. gut gerührtem Reaktor üblicher Bauarten durchgeführt werden.

Das gefällte Aluminiumhydroxid ist überwiegend kristallin und partikelförmig. Die Partikel sind sowohl Primärpartikel wie Partikelagglomerate. Dem Fachmann ist bekannt, dass die Partikelgröße des gefällten Aluminiumhydrats durch Variation der Fällungsbedingungen wie Temperatur, pH-Wert-Verlauf, Zugabegeschwindigkeit und über die Zugabe fällungsaktiver Substanzen wie z.B. Kristallkeime, Magnesiumionen oder organische Substanzen gesteuert werden kann. In einer besonderen Ausführung weisen die Partikel eine Partikelgröße von mindestens 0,05 $\mu$m, bevorzugt mindestens 0,5 $\mu$m und insbesondere mindestens 1,0 $\mu$m auf.

Die Mengen werden so abgestimmt, dass die gebildeten Kompositpigmentpartikel mindestens 20 Gew.-%, insbesondere mindestens 40 Gew.-% Aluminiumhydroxid enthalten. Der $TiO_2$-Gehalt der Kompositpigmentpartikel beträgt vorzugsweise 20 bis 80 Gew.-%.

In einer besonderen Ausführung der Erfindung wird der Suspension mindestens ein weiterer anorganischer und/oder mindestens ein organischer Füllstoff zugegeben. Der anorganische Füllstoff kann ausgewählt sein aus der Gruppe natürliche und synthetische Silikate (z.B. Talkum, Kaolin, Glimmer, Mullit, Quarz, Kieselgele, gefällte Kieselsäure, pyrogene Kieselsäure, Siliumdioxid, oberflächenbehandeltes Siliciumdioxid), Carbonate (z.B. natürliches oder gefälltes Calcium- oder Magnesiumcarbonat, Dolomit), Sulfate (z.B. natürliches oder gefälltes Calcium- und Bariumsulfat), Oxide/Hydroxide (z.B. Aluminiumoxid, Aluminiumhydroxid, Magnesiumoxid), natürliche Gesteine wie Basalt und Bimsmehl, Perlite sowie weitere dem Fachmann bekannten Füllstoffe (z.B. Wollastonit, Feldspate, Glimmer, faserartige Füllstoffe, Glasmehl, etc.). Besonders bevorzugt sind Dolomit, Huntit, Magnesit und Hydromagnesit.

Der weitere Füllstoff weist bevorzugt eine Partikelgröße von etwa 0,1 bis 30 $\mu$m, insbesondere von etwa 1 bis 10 $\mu$m auf. Der weitere Füllstoff kann in einer Menge von 10 bis 60 Gew.-%, bevorzugt 20 bis 50 Gew.-% bezogen auf Kompositpigmentpartikel zugegeben werden.

Abschließend werden die Kompositpigmentpartikel aus der Suspension abgetrennt, gewaschen und getrocknet.

Je nach gewünschter Qualität des mit den Kompositpigmentpartikeln hergestellten Produkts (Beschichtung, Kunststoff, Laminat, etc.) kann die Effektivität des Pigments, insbesondere des Titandioxids optimiert werden. Durch Einsparung von Pigment, erreicht durch die effektivere Nutzung im Kompositpigmentpartikel, ergibt sich ein wirtschaftlicher Vorteil im Vergleich zum getrennten Einsatz von Extender und Pigment. Die Verwendung der erfindungsgemäß hergestellten Kompositpigmentpartikel im Anwendersystem ermöglicht eine Pigmenteinsparung von bis zu 30%, bevorzugt 15 bis 30% bei sonst gleichen optischen Eigenschaften.

Insbesondere kann das Kompositpigment als teilweiser oder 100 %iger Ersatz für das reine Pigment (z.B. Titandioxid) eingesetzt werden.

Ein weiterer Vorteil liegt darin, dass das $TiO_2$ auf dem Kompositpigmentpartikel bereits gut verteilt vorliegt und somit Energie für die Dispergierung beispielsweise in einem Lacksystem eingespart werden kann. Die im Vergleich zum reinen Pigment gröberen Kompositpigmentpartikel benötigen weniger Dispergier- und Mahlenergie und geringere Mengen an Dispergiermitteln. Hierdurch ergibt sich für den Lackhersteller ein weiterer Vorteil.

In einer weiteren Ausführung des erfindungsgemäßen Verfahrens können die erfindungsgemäßen Kompositpigmentpartikel mit anorganischen Verbindungen wie beispielsweise $SiO_2$, $Al_2O_3$ oder Phosphat behandelt werden, wie sie bei der Titandioxidpigmentherstellung üblicherweise eingesetzt werden. Dem Fachmann sind die entsprechenden Verbindungen und Verfahrensweisen bekannt.

In einer besonderen Ausführung des erfindungsgemäßen Verfahrens können zusätzlich organische Additive zugegeben werden, vorzugsweise in einer Menge von 0,05 bis 30 Gew.-% bevorzugt 0,5 bis 10 Gew.-% bezogen auf Pigment-Extendermischung. Die organischen Additive können sowohl in fester als auch in flüssiger Form zugegeben werden. Geeignet als organische Additive sind zum einen handelsübliche wachsartige Additive mit oder ohne weitere chemische Funktionalisierung. Zum anderen sind bekannte Dispergieradditive oder andere in der Lacktechnologie übliche Hilfsstoffe beispielsweise für Rheologie, Entschäumung, Benetzung etc. geeignet.

Die erfindungsgemäßen Kompositpigmentpartikel sind geeignet für die Verwendung in Beschichtungen, Kunststoffen, Papier und Laminaten.

Beispiele

Die Erfindung wird anhand der folgenden Beispiele genauer beschrieben, ohne dass dadurch der Umfang der Erfindung eingeschränkt werden soll.

Beispiel 1

In eine wässrige Suspension von 250 g unbehandelten Titandioxidpigmentpartikeln (Grundkörper) in 500 mL Wasser mit einem pH-Wert von ca. 10 wurde unter intensivem Rühren 250 g $Al_2O_3$ in Form einer wässrigen Natriumaluminatlösung (Konzentration 295 g/L)gegeben. Dabei stieg der pH-Wert auf 12 bis 13. Anschließend wurde durch pH-Wert-Absenkung die Aluminiumhydroxid-Fällung durchgeführt, indem über einen Zeitraum von 8 Stunden schrittweise 25%ige HCl zugegeben wurde. Am Ende war ein pH-Wert von 6 bis 8 erreicht. Es folgte eine Reifung über mehrere Stunden. Anschließend wurde der Feststoff auf einer Nutsche mit entsalztem Wasser gewaschen, abgetrennt und im Laborofen 16 Stunden bei 105°C getrocknet.

Die hergestellten Kompositpartikel enthielten 50 Gew.-% Titandioxid und 50 Gew.-% Aluminiumhydroxid. Die Kompositpartikel wurden unter dem Rasterelektronenmikroskop untersucht (Figuren 1, 2). Sie sind im wesentlichen aus großen Aluminiumhydroxid-Kristallen bzw. -Kristallagglomeraten aufgebaut, auf deren Oberfläche Titandioxidpartikel fixiert sind.

Anschließend wurden die Kompositpigmentpartikel in eine Innendispersionsfarbe (Testfarbe) mit der in Tabelle 1 angegebenen Rezeptur eingearbeitet, wobei das $TiO_2$-Pigment KRONOS 2310 teilweise durch die Kompositpigmentpartikel gemäß Beispiel 1 ersetzt wurde, so dass der Netto-$TiO_2$-Pigmentgehalt um 10 Gew.-% (Beisp. 1-1), bzw. um 20 Gew.-% (Beisp. 1-2), bzw. um 30 Gew.-% (Beisp. 1-3) jeweils bezogen auf $TiO_2$-Pigment erniedrigt wurde. Die Pigmentvolumenkonzentration (PVK) der Testfarbe betrug 78 %.

Als Vergleichsbeispiel 1 wurde die Testfarbe nur mit dem kommerziellen $TiO_2$-Pigment KRONOS 2076 (Universalpigment mit niedriger Nachbehandlung) und als Vergleichsbeispiel 2 wurde die Testfarbe nur mit dem kommerziellen $TiO_2$-Pigment KRONOS 2310 (High-end-Pigment optimiert für Lackanwendungen), jeweils ohne Kompositpigmentpartikel, hergestellt.

| Tabelle 1: Rezeptur der weißen Innendispersionsfarbe (Testfarbe) | |
|---|---|
| Wasser | 17,75 Gew.-% |
| Calgon N neu (Dispergiermittel) | 0,05 Gew.-% |
| Dispex N 40 (Dispergiermittel) | 0,30 Gew.-% |
| Agitan 315 (Entschäumer) | 0.20 Gew.-% |
| Acticid MBS (Algizid/Fungizid) | 0.40 Gew.-% |
| $TiO_2$-Pigment (KRONOS 2310) | 22,00 Gew.-% |

(fortgesetzt)

| | |
|---|---|
| Steamat (Füllstoff) | 7,00 Gew.-% |
| Socal P$_2$ (Füllstoff) | 2,00 Gew.-% |
| Omyacarb 2-GU (Füllstoff) | 11,80 Gew.-% |
| Omyacarb 5-GU (Füllstoff) | 15,50 Gew.-% |
| Celite 281 SS(Füllstoff) | 2,00 Gew.-% |
| Tylosepaste (3%ig) | 10,00 Gew.-% |
| Mowilith LDM 1871 (Bindemittel) | 11,00 Gew.-% |

Die Testfarbe wurde hinsichtlich Kontrastverhältnis (KV) und Aufhellvermögen (TS) getestet. Die Messergebnisse sind in Tabelle 2 zusammengefasst.

Tabelle 2: Weiße Innendispersionsfarbe

| | Kontrastverhältnis (Mittelwert 80-125μm) | Aufhellvermögen (TS) (standardisiert) | Netto TiO$_2$-Pigmentgehalt [Gew.-%] |
|---|---|---|---|
| Beispiel 1-1 | 96,9 | 103 | 19,8 |
| Beispiel 1-2 | 96,8 | 101 | 18,7 |
| Beispiel 1-3 | 96,7 | 98 | 17,6 |
| Vergleichsbeispiel 1 | 95,5 | 94 | 22,0 |
| Vergleichsbeispiel 2 | 96,7 | 100 | 22,0 |

Testmethoden

Zur Bestimmung des Kontrastverhältnisses wurde die nach Rezepturvorschrift hergestellte weiße Innendispersionsfarbe (Testfarbe) mit Spaltrakeln (80 - 125 μm) mittels automatischem Filmaufziehgerät mit einer Geschwindigkeit von 12,5 mm/s auf Morest-Kontrastkarten aufgezogen. Anschließend wurden die Farbwerte Y über schwarzem Untergrund (Y$_{(schwarz)}$) und Y über weißem Untergrund (Y$_{(weiß)}$) je dreimal mit dem Spektralphotometer Colorview gemessen. Das Kontrastverhältnis wurde nach folgender Formel errechnet:

$$KV\ [\%] = Y_{(schwarz)} / Y_{(weiß)} \times 100$$

Zur Bestimmung des Aufhellvermögens (TS) wurde 50 g der nach Rezepturvorschrift hergestellten Testfarbe mit 0,5 g Schwarzpaste Colanyl Schwarz PR 130 vermischt und mittels Rakel (Spalthöhe 100 μm) auf Morestkarten aufgetragen. Die Remissionswerte der Schicht wurden mit einem Byk-Gardner Color View gemessen. Die daraus abgeleiteten TS-Werte sind auf das Vergleichsbeispiel als Standard bezogen

Fazit

Die Verwendung erfindungsgemäßer Kompositpigmentpartikel aus Aluminiumhydroxid und Titandioxid-Pigment beispielsweise in Farben ermöglicht je nach gewählter Kombination Pigmenteinsparungen ohne oder mit nur geringen Verlusten der optischen Eigenschaften. Alternativ können bei gleichem Pigmentgehalt auch bessere Werte insbesondere im Aufhellvermögen erzielt werden.

**Patentansprüche**

1. Aluminiumhydroxid-haltiges Kompositpigment enthaltend anorganische Pigmentpartikel und gefälltes Aluminiumhydroxid in einer Menge von mindestens 20 Gew.-%, bevorzugt mindestens 40 Gew.-% bezogen auf Kompositpigment.

2. Kompositpigment nach Anspruch 1 **dadurch gekennzeichnet, dass** die Pigmentpartikel Titandioxidpartikel sind.

3. Kompositpartikel nach Anspruch 1 oder 2 **dadurch gekennzeichnet, dass** zusätzlich mindestens ein anorganischer oder organischer Füllstoff enthalten ist.

4. Kompositpartikel nach einem oder mehreren der Ansprüche 1 bis 3 **dadurch gekennzeichnet, dass** die Kompositpartikel eine äußere Phosphat-, $Al_2O_3$- oder $SiO_2$-haltige Beschichtung aufweisen.

5. Verfahren zur Herstellung von Aluminiumhydroxid-haltigen Kompositpigmentpartikeln, wobei eine wässrige alkalische Lösung von Natriumaluminat mit einem pH-Wert von mindestens 12 bereitgestellt wird, anschließend anorganische Pigmentpartikel zugegeben werden und der pH-Wert der Lösung in den Bereich <8 und >3 abgesenkt wird, so dass Aluminiumhydroxid gefällt wird und sich Aluminiumhydroxid-haltige Kompositpigmentpartikel bilden, die mindestens 20 Gew.-% bevorzugt mindestens 40 Gew.-% gefälltes Aluminiumhydroxid enthalten, und die Kompositpartikel abschließend abgetrennt werden.

6. Verfahren nach Anspruch 5 **dadurch gekennzeichnet, dass** die anorganischen Pigmentpartikel Titandioxidpartikel sind.

7. Verfahren nach Anspruch 5 oder 6 **dadurch gekennzeichnet, dass** die wässrige Natriumaluminatlösung zumindest teilweise ein industrieller Reststoff ist.

8. Verfahren nach einem oder mehreren der Ansprüche 5 bis 7 **dadurch gekennzeichnet, dass** mindestens ein weiterer anorganischer und/oder organischer Feststoff zugegeben wird.

9. Verfahren nach einem oder mehreren der Ansprüche 5 bis 8 **dadurch gekennzeichnet, dass** die Kompositpigmentpartikel abschließend mit Phosphorsäure, Natriumsilikat und/oder einem Aluminiumsalz behandelt werden.

10. Verwendung der Kompositpigmentpartikel nach einem oder mehreren der Ansprüche 1 bis 9 in Beschichtungen, Kunststoffen, Papier und Laminat.

Fig. 1

Fig. 2

Europäisches Patentamt

European Patent Office

Office européen des brevets

# EUROPÄISCHER RECHERCHENBERICHT

Nummer der Anmeldung

EP 15 00 1123

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/079745 A1 (SHIMIZU KATSUMI [US] ET AL) 20. März 2014 (2014-03-20) | 1-4,6-10 | INV. C09C1/36 |
| Y | * Absätze [0023], [0033] - [0038]; Anspruch 1; Beispiel 1 * ----- | 5 | C09C1/40 C09C1/00 C09D5/02 |
| Y | WO 2014/078039 A1 (DU PONT [US]) 22. Mai 2014 (2014-05-22) * Beispiel 1 * ----- | 5 | |

RECHERCHIERTE SACHGEBIETE (IPC)

C09C
C09D

Der vorliegende Recherchenbericht wurde für alle Patentansprüche erstellt

| Recherchenort | Abschlußdatum der Recherche | Prüfer |
|---|---|---|
| Den Haag | 14. Oktober 2015 | Siebel, Eric |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 15 00 1123

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-10-2015

| Im Recherchenbericht angeführtes Patentdokument | Datum der Veröffentlichung | Mitglied(er) der Patentfamilie | Datum der Veröffentlichung |
|---|---|---|---|
| US 2014079745 A1 | 20-03-2014 | KEINE | |
| WO 2014078039 A1 | 22-05-2014 | AU 2013345216 A1<br>CA 2890928 A1<br>CN 104937040 A<br>EP 2920249 A1<br>WO 2014078039 A1 | 21-05-2015<br>22-05-2014<br>23-09-2015<br>23-09-2015<br>22-05-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 1999035193 A1
- DE 10057294 C5
- EP 0881299 B1
- DE 102006012564 A1
- EP 0956316 B1
- DE 1792118 A1
- WO 2000001771 A1
- WO 2014000874 A1
- EP 13005813 A